# EUROPEAN PATENT SPECIFICATION

(11) **EP 0 607 021 B1**
(45) Date of publication and mention of the grant of the patent: **24.09.1997**
(21) Application number: 94300187.5
(22) Date of filing: 11.01.1994
(51) Int. Cl.: B60T 7/08

(54) **Trailer having a handbrake**
Anhänger mit einer Handbremse
Remorque avec frein à main

(30) Priority: 12.01.1993 GB 9300445
(43) Date of publication of application: 20.07.1994
(73) Proprietor: INDESPENSION LTD., Bolton BL1 7AQ (GB)
(72) Inventor: Mangnall, Lee, Great Knowley, Chorley, PR6 8TQ (GB)
(74) Representative: Goodwin, Mark

(56) References cited:
- EP-A- 0 476 208
- WO-A-91/19595
- GB-A- 995 335
- US-A- 3 413 871

## Description

This invention relates to a trailer having a pivotally mounted handbrake handle.

Most trailers which are fitted with auto reverse brakes have a pivotally mounted handbrake located adjacent the towing coupling of the trailer. The arm of the handbrake cannot extend to the front of the trailer as it would strike the towing vehicle as the vehicle moved relative to the trailer about the trailer coupling. As a result the arms of known trailer handbrakes are often very short, say less than 45 cms. Thus heavy forces need to be applied to the handbrake in order to release the brakes and overcome the auto reverse spring mechanism.

The present invention has been made from a consideration of this problem.

According to the present invention there is provided a trailer having a pivotally mounted trailer handbrake handle operative to engage a brake for the trailer, characterised in that the trailer handbrake handle is telescopic, a portion of the said handle being moveable from a retracted position in which the handbrake is not applied and in which the trailer is operative to be towed by a towing vehicle to an extended position during application of the handbrake.

Thus the handle can be extended in order to provide additional torque when the handbrake is being operated, while at the same time being sufficiently small to allow the trailer to move about the towing coupling when on the road.

In a preferred embodiment of the invention the moveable handle portion is resiliently sprung into one of the retracted or extended positions. If the moveable handle portion is urged into the extended position then a latch or other capture mechanism will be required in order to capture the handle portion when in the retracted position. If the handle is telescopic a stop/guide bush arrangement is preferably provided.

In order that the present invention may be more readily understood specific embodiments thereof will now be described by way of example only with reference to the accompanying drawings in which:
Fig.1 shows one trailer handbrake and coupling in accordance with the invention;
Fig.2 shows the telescopic handle portion of Fig.1 in the retracted position;
Fig.3 shows the telescopic handle of Fig.1 in the extended operative position;
Fig.4 shows an enlarged view of the outer tube of the handle portion of Figs. 1 to 3 swaged for a roll pin; and
Fig. 5 shows a further handle in accordance with the present invention.

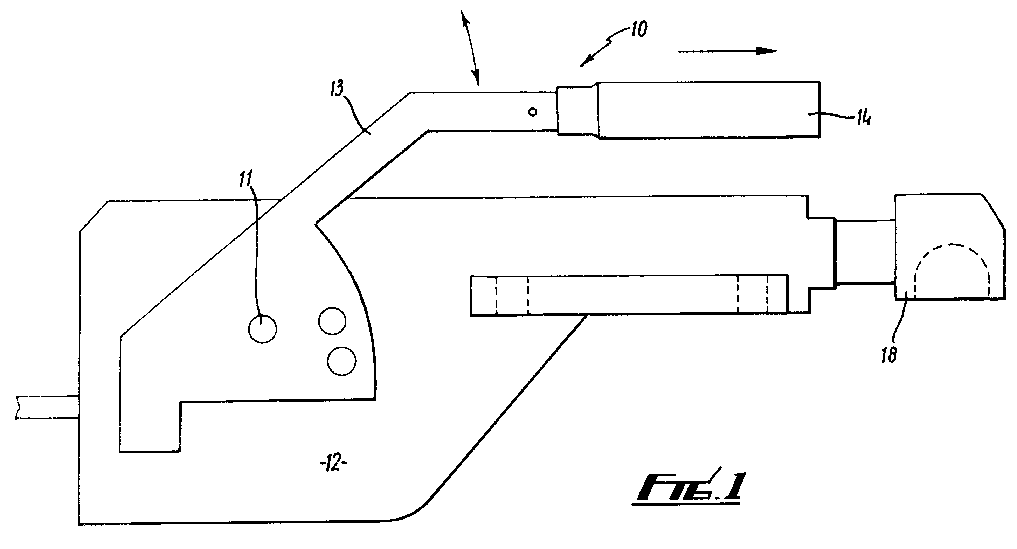

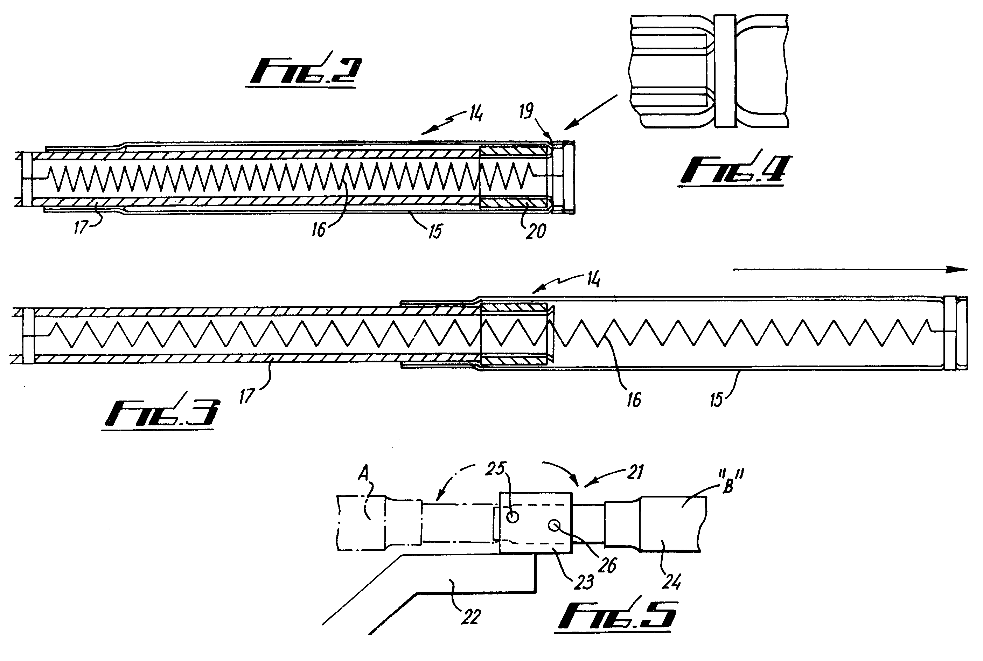

Referring to Figs. 1 to 3 a trailer handbrake 10 is connected via a pivot 11 to a coupling body 12 (only part of which is illustrated). The arm 13 of the handbrake has a telescopic handle portion 14 the outer tube 15 of which is movable between a retracted position as shown in Figs. 1 and 2 and an extended position as shown in Fig. 3.

A spring 16 is provided in the handle portion connecting one end of the inner tube 17 of the telescopic handle portion 14 with the opposite end of the outer tube 15. The spring 16 urges the outer tube 15 of the handle into the retracted position. Thus when the towing trailer is in transit the handle portion 14 will not contact the towing vehicle. Also no contact is made with the towing vehicle when the trailer is stationary. However, when it is necessary to operate the handbrake 10 so as to activate the brake rod 21 additional torque can be achieved by first extending the handle into the extended position as shown in Fig.3. Once the handbrake has been operated then the spring 16 returns the handle portion into the retracted position. It is noted that the handle portion can extend beyond the front of the towing coupling head 18 of the coupling body 12 in the extended position.

Referring to Fig.4 the outer tube 15 of the telescopic handle portion is seen to be swaged to a roller pin 19. The device includes a stop/guide bush 20 which guarantees both a smooth operation and also that the inner and outer tubes do not become separated.

The device can be used for both pressed steel and cast coupling bodies. Thus the idea lends itself to any type of coupling.

Referring to Fig.5 a trailer handle 21 has an arm 22 at the free end of which is located a pivotal mounting body 23 for a handle extension piece 24. The handle extension piece is spring biased into the withdrawn position "A". Thus when the trailer is in transit the handle extension piece 24 will not contact the towing vehicle. However, when it is necessary to operate the handbrake additional torque can be achieved by first moving the handle extension piece 24 about pivot 25 into the extended position "B". Here a locking member in the form of a pin may be passed through an aperture 26 in the mounting body 23 and through apertures in the handle extension piece so as to temporarily lock the extension piece in the extended position "B".

It is to be understood that the above described embodiment is by way of illustration only. Many modifications and variations are possible.

It should also be noted that the action described above to release the brakes can also be used in reverse such that a greater torque can be produced when actually applying the brakes.

## Claims

1. A trailer having a pivotally mounted trailer handbrake handle (11) operative to engage a brake for the trailer, characterised in that the trailer handbrake handle (10) is telescopic, a portion (15) of the said handle being moveable from a retracted position in which the handbrake is not applied and in which the trailer is operative to be towed by a towing vehicle to an extended position during application of the handbrake.

2. A trailer as claimed in claim 1, characterised in that the said handle portion (15) is resiliently biassed into either the withdrawn or extended position.

3. A trailer as claimed in claim 1 or claim 2, characterised in that the said handle portion (15) is resiliently biassed into the withdrawn position.

4. A trailer as claimed in claim 1 or claim 2, characterised in that the said handle portion (15) is resiliently biassed into the extended position.

5. A trailer as claimed in claim 4, characterised in that a capture mechanism is provided to capture the handle portion when in the withdrawn position.

## Patentansprüche

1. Anhänger mit einem schwenkbar angebrachten Anhänger-Handbremsengriff (11), um betriebsmäßig eine Bremse des Anhängers zu betätigen,
dadurch **gekennzeichnet,**
daß der Anhänger-Handbremsengriff (10) teleskopisch ist,
daß ein Bereich (15) des Griffes von einer zurückgezogenen Position, in der die Handbremse nicht angezogen ist und in welcher der Anhänger betriebsbereit ist, um von einem Zugfahrzeug gezogen zu werden, in eine ausgefahrende Position, während der Anwendung der Handbremse bewegbar ist.

2. Anhänger nach Anspruch 1,
dadurch **gekennzeichnet,**
daß der Griffbereich (15) federnd entweder in die zurückgezogene oder ausgefahrene Position vorgespannt ist.

3. Anhänger nach Anspruch 1 oder 2,
dadurch **gekennzeichnet,**
daß der Griffbereich (15) federnd in die zurückgezogene Position vorgespannt ist.

4. Anhänger nach Anspruch 1 oder 2,
dadurch **gekennzeichnet,**
daß der Griffbereich (15) federnd in die ausgefahrene Position vorgespannt ist.

5. Anhänger nach Anspruch 4,
dadurch **gekennzeichnet,**
daß ein Festhaltemechanismus vorgesehen ist, um den Griffbereich in der zurückgezogenen Position festzuhalten.

## Revendications

1. Remorque comprenant une poignée de frein à main de remorque montée pivotante destinée à serrer un frein pour la remorque, caractérisée par le fait que la poignée (10) de frein à main de la remorque est télescopique, une partie (15) de ladite poignée étant déplaçable depuis une position rétractée dans laquelle le frein à main n'est pas serré et dans laquelle la remorque est prête à être remorquée par un véhicule de remorquage, jusqu'à une position étendue durant le serrage du frein.

2. Remorque selon la revendication 1, dans laquelle ladite partie de poignée (15) est élastiquement rappelée en position soit rétractée soit étendue.

3. Remorque selon l'une des revendications 1 et 2 dans laquelle la partie de poignée (15) est élastiquement rappelée en position rétractée.

4. Remorque selon l'une des revendications 1 et 2, dans laquelle la partie de poignée (15) est élastiquement rappelée en position étendue.

5. Remorque selon la revendication 4, dans laquelle un mécanisme de capture est prévue pour capturer la partie de poignée quand elle est en position rétractée.
